# EUROPEAN PATENT SPECIFICATION

(11) **EP 2 306 325 B1**
(45) Date of publication and mention of the grant of the patent: **17.10.2012**
(21) Application number: 10171869.0
(22) Date of filing: 04.08.2010
(51) Int. Cl.: G06F 13/28, G06F 1/32

(54) **Data processing circuit**
Datenverarbeitungsschaltung
Circuit de traitement de données

(30) Priority: 11.09.2009 JP 2009210034
(43) Date of publication of application: 06.04.2011
(73) Proprietor: Renesas Electronics Corporation, Nakahara-ku Kawasaki Kanagawa 211-8668 (JP)
(72) Inventor: Yokoyama, Hiroyuki, Kanagawa 211-8668 (JP)
(74) Representative: Betten & Resch

(56) References cited:
- EP-A2- 1 677 175
- JP-A- 10 333 772
- JP-A- 2001 350 713
- JP-A- 2003 248 652
- JP-A- 2005 056 067
- US-A1- 2008 148 083

## Description

The present invention relates to a data processing circuit and, particularly, to a technique of reducing power consumption of a data processing circuit that decodes and transfers compressed data of audio, video or the like.

### 2. Description of Related Art

In a data processing system, DMA (Direct Memory Access) is widely adopted for data transfer between memory and memory or between memory and an I/O device in order to reduce the load of a CPU. Further, improved techniques have been proposed from various points of view for a system in which DMA is adopted for data transfer.

For example, Japanese Unexamined Patent Publication No. 2005-056067 discloses a technique that, in a system where reserved execution of a plurality of DMA transfers is performed, repeats sequential execution of the respective DMA transfers on condition that the bus occupancy time by one DMA transfer is equal to or shorter than an available bus occupancy time value. According to the technique, it is described that system failure is avoidable in real-time processing.

Further, Japanese Unexamined Patent Publication No. 2003-248652 discloses a technique that, in a system where a plurality of DMA transfer requests are executed in succession by assigning priorities to the DMA transfer requests, suspends the clock supply to an unused area of memory of a transfer source or a transfer destination by a data transfer control unit which corresponds to a DMA controller (which is also referred to hereinafter as DMAC). This technique thereby reduces power consumption of the memory. Japanese Unexamined Patent Publication No. 2003-248652 also discloses a technique that supplies a clock to a control block related to data transfer only for a minimum necessary period during DMA transfer, thereby enabling further reduction of power consumption.

Japanese Unexamined Patent Publication No. 2001-350713 discloses a technique that, in a data processor where audio data transferred by a DMAC is buffered alternately into two storage locations in memory for use in compression processing by a CPU, frees the CPU from the load of changing the setting of data transfer conditions such as the address of the transfer destination of audio data. Specifically, the size of the two storage locations in the memory corresponds to the processing unit quantity, e.g. 160 samples, when the CPU compresses audio data. The DMAC makes an interrupt request to the CPU each time a transfer start address of transfer destination memory is set to a default value by the CPU, and data transfer to the memory reaches the above processing unit quantity, starting from the transfer start address, and then initializes the address of the transfer destination to the default transfer start address each time an interrupt is requested twice.

This technique allows the CPU to be freed from the load of changing data transfer conditions such as a transfer destination address of DMA transfer as well as achieving alternate transferring of audio data into the two storage locations in the memory, so that the amount of calculations is reduced. Therefore, by reducing the operating frequency of the CPU, it is possible to contribute to lower power consumption of the system.

Recently, portable playback apparatus of audio data or video data have been widespread. Because a battery is often used as a power source of such portable playback apparatus, there is a severe demand for reduction of power consumption during a playback operation.

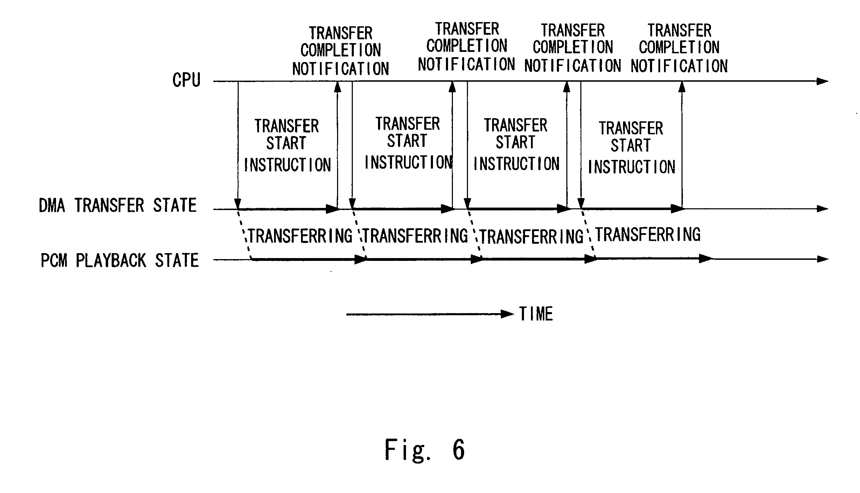

In an audio reproduction system in which DMA is adopted for data transfer, audio data is generally decoded and stored into a transfer buffer. Then, a DMAC transfers the audio data stored in the transfer buffer to a sound controller (e.g. a PCM controller) for reproduction. Fig. 6 shows a timing relationship between data transfer and reproduction in such a system.

The DMAC starts DMA transfer in response to a transfer start instruction from a CPU, and transfers the data stored in the transfer buffer to the PCM controller. Upon completion of the transfer, the DMAC transmits a transfer completion notification to the CPU. Receiving the transfer completion notification from the DMAC, the CPU issues the next transfer start instruction. There is only a short time from the reception of the transfer completion notification to the issue of the next transfer start instruction by the CPU.

The PCM controller reproduces data transferred by the DMAC and makes audio output. The PCM controller generally incorporates an internal buffer for absorbing the above-described short time so as to avoid the interruption of audio output.

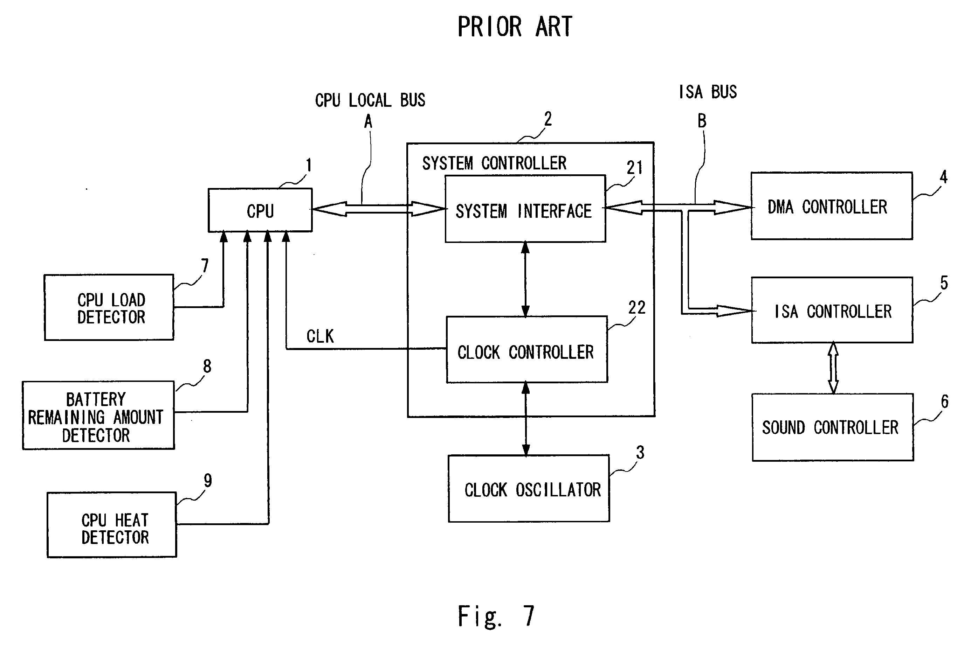

Japanese Unexamined Patent Publication No. 10-333772 discloses a technique that suspends the clock supply to a CPU according to the situation in an audio reproduction system by using a DMA request (e.g. transfer completion notification) generated by a DMAC as an event to resume the clock supply to the CPU, thereby reducing power consumption. This is described hereinafter with reference to Fig. 7.

The document US 2008/148083 discloses a system that has a central processing unit (CPU) operable to operate in a sleep or low power mode and in an active mode, a plurality of system components operable to operate in a sleep or low power mode and in an active mode, and a direct memory access (DMA) controller operating independently from the CPU and operable to operate in a sleep or low power mode and in an active mode, wherein the DMA controller is further operable to transfer data from and to a memory or peripheral device, wherein when the system is in a sleep or low power mode, only the DMA controller and any system component which is necessary to perform a DMA transaction are switched into active mode.

Fig. 7 corresponds to Fig. 1 of Japanese Unexamined Patent Publication No. 10-333772. In the computer system shown in Fig. 7, a clock controller 22 included in a system controller 2 selectively supplies or blocks a clock necessary for the operation of the system which is generated by a clock oscillator 3 to a CPU 1. Specifically, according to detection results of a CPU load detector 7, a battery remaining amount detector 8 and a CPU heat detector 9, when the CPU 1 is in an idle mode, for example, the clock controller 22 suspends the clock supply to the CPU 1. Then, in response to a DMA request which is generated by a DMA controller 4 upon completion of the transfer, the clock controller 22 resumes the clock supply to the CPU 1. Thus, the clock supply to the CPU 1 is resumed each time DMA transfer is completed, so that the next the DMA transfer can be performed. Further, an event to resume the clock supply to the CPU 1 is limited to the DMA request to thereby prevent the suspension of the clock supply to the CPU 1 from being cancelled repeatedly, thereby reducing power consumption.

### SUMMARY

However, because the technique of Japanese Unexamined Patent Publication No. 10-333772 resumes the clock supply to the CPU to which the clock supply has been suspended by using the DMA request which is made upon completion of DMA transfer as an event, there is a possibility that the time from the issue of the DMA request to the issue of the next data transfer start instruction by the CPU exceeds the length that can be absorbed by the internal buffer of the PCM controller. This leads to a problem that the DMA transfer is not in time for the PCM reproduction, causing the interruption of audio output.

Further, the technique of Japanese Unexamined Patent Publication No. 2003-248652 can be applied in order to reduce power consumption of a video or audio reproduction system in which DMA is adopted for data transfer. This is described hereinafter, taking an audio reproduction system as an example.

For example, DMA transfer from the transfer buffer to the PCM controller is requested a plurality of times in succession, and a clock is supplied to the control block related to data transfer for a minimum necessary period during the execution of the DMA transfer.

Because Japanese Unexamined Patent Publication No. 2003-248652 does not contain specific description about "the control block related to data transfer", the case where the control block is the DMAC itself is assumed firstly. Specifically, a clock is supplied to the DMAC for a minimum necessary period during the DMA transfer.

Note that, in the audio reproduction system, it is necessary to supply data to the PCM controller without interruption, and therefore the operation of the DMAC cannot be stopped during the DMA transfer. Therefore, in the case where "the control block related to data transfer" described in Japanese Unexamined Patent Publication No. 2003-248652 indicates the DMAC itself, the technique disclosed therein is not applicable to the audio reproduction system.

On the other hand, various peripheral devices are mounted to a typical DMAC. The peripheral devices do not necessarily operate all the time. For example, the peripheral devices are not necessary to operate when simply outputting the audio data that is already stored in the transfer buffer to the PCM controller. Further, a system interface or the like for transmitting a DMA transfer request to the DMAC also does not necessarily operate all the time. Therefore, in the case where "the control block related to data transfer" described in Japanese Unexamined Patent Publication No. 2003-248652 is assumed to be the peripheral device or the system interface, the technique disclosed therein is applicable to the audio reproduction system. Thus, the clock supply to the peripheral device or the system interface is suspended during the DMA transfer to thereby suppress power consumption.

However, a general-purpose DMAC is generally placed in the same power supply area as the peripheral device, the system interface or the like. Thus, the power supply to the peripheral device or the system interface cannot be suspended in the state where a clock is supplied to the DMAC.

An exemplary aspect of the present invention is a data processing circuit that decodes compressed data and transfers data by DMA. The data processing circuit includes a buffer memory that stores transfer data obtained by decoding the compressed data, a device power supply area, and a data transfer unit.

The device power supply area includes a general-purpose DMA controller that can transfer the transfer data stored in the buffer memory, peripheral devices of the general-purpose DMA controller, and a system controller that transmits a DMA transfer request, and centralized power control is made therein.

The system controller transmits a DMA transfer request to the general-purpose DMA controller or the data transfer unit,

The data transfer unit can transfer the transfer data stored in the buffer memory. Specifically, in response to a DMA transfer request received through the system controller, the data transfer unit transfers transfer data corresponding to the DMA transfer request and, after completion of transfer in execution, transfers transfer data corresponding to a next DMA transfer request received during execution of the transfer.

The power of the device power supply area is turned off on condition that the data transfer unit is executing transfer and the next DMA transfer request has been transmitted to the data transfer unit, and turned on each time transfer by the data transfer unit is completed.

The implementation of the data processing circuit according to the above exemplary aspect as an apparatus or a method, a program causing a computer to execute a part of processing of the data processing circuit, an audio or video reproduction apparatus that includes the data processing circuit or the like is also effective as exemplary aspects of the present invention.

According to the exemplary aspects of the present invention described above, it is possible to reduce power consumption of an apparatus that reproduces compressed data of audio, video or the like.

### BRIEF DESCRIPTION OF THE DRAWINGS

The above and other exemplary aspects, advantages and features will be more apparent from the following description of certain exemplary embodiments taken in conjunction with the accompanying drawings, in which:
Fig. 1 is a view showing an LSI according to a first exemplary embodiment of the invention;
Fig. 2 is a view showing a sequence of data transfer by a general-purpose DMAC in the LSI shown in Fig. 1;
Fig. 3 is a view showing a sequence of data transfer by a PDMAC in the LSI shown in Fig. 1;
Fig. 4 is a view showing an LSI according to a second exemplary embodiment of the invention;
Fig. 5 is a view showing an LSI according to a third exemplary embodiment of the invention;
Fig. 6 is a view showing a timing relationship between transfer and reproduction in an audio reproduction system with the adoption of DMA; and
Fig. 7 is a view showing a computer system disclosed in Japanese Unexamined Patent Publication No. 10-333772.

### DETAILED DESCRIPTION OF THE EXEMPLARY EMBODIMENTS

Exemplary embodiments of the present invention will be explained hereinbelow with reference to the drawings. The following description and the attached drawings are appropriately shortened and simplified to clarify the explanation. Further, elements that are shown as functional blocks for performing various kinds of processing in the drawings may be configured by a CPU, memory or another circuit as hardware or may be implemented by a program loaded to memory or the like as software. It would be thus obvious to those skilled in the art that those functional blocks may be implemented in various forms such as hardware only, software only or a combination of those, and not limited to either one.

### [First exemplary embodiment]

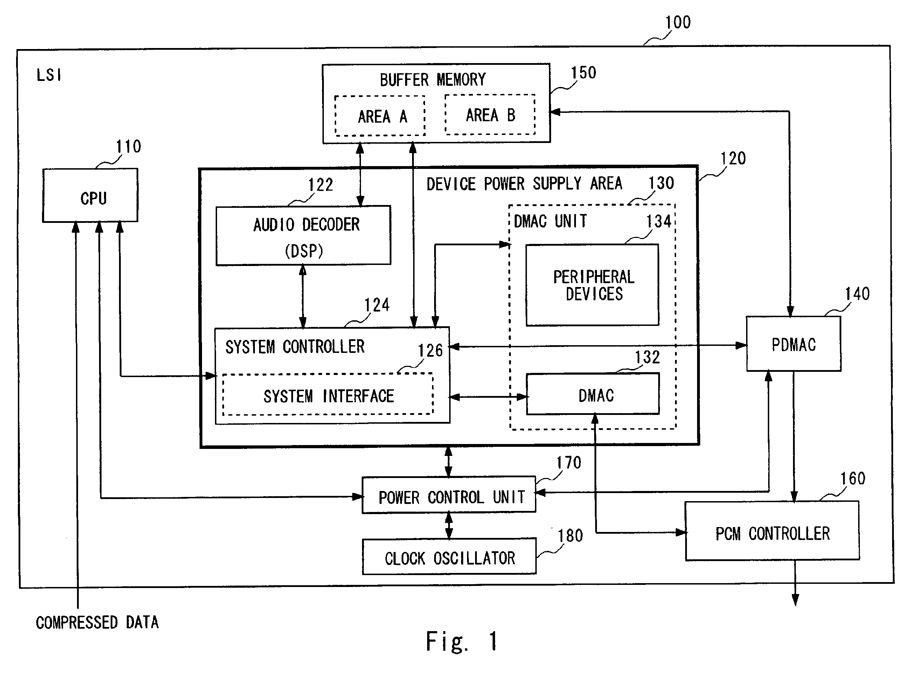

Fig. 1 shows an LSI 100 according to a first exemplary embodiment of the invention. The LSI 100 is formed in one-chip, and it is a data processing circuit that decodes audio data (compressed data) stored in an external storage device such as RAM and outputs the decoded data to a DAC (Digital-Analog Converter) or a speaker, which is not shown.

The LSI 100 includes a CPU 110, a device power supply area 120, a PDMAC 140, a buffer memory 150, a PCM controller 160, a power control unit 170, and a clock oscillator 180.

The device power supply area 120 includes an audio decoder 122 which is a DSP (Digital Signal Processor), a system controller 124, and a DMAC unit 130. The DMAC unit 130 includes a DMAC 132 and peripheral devices 134 of the DMAC 132.

The system controller 124 includes a system interface 126, and relays communication between the CPU 110 and the audio decoder 122, between the audio decoder 122 and the DMAC unit 130, and between the audio decoder 122 and the PDMAC 140.

Note that the centralized power control is made for the device power supply area 120, and individual power on/off control cannot be made in each functional block thereof.

The audio decoder 122 performs request of data to the CPU 110, decoding, issue of a DMA transfer request or the like. The audio decoder 122 stores transfer data (PCM data in this case) obtained by decoding into the buffer memory 150 (e.g. SRAM). In this exemplary embodiment, the audio decoder 122 performs buffering of PCM data alternately into two areas (an area A and an area B) in the buffer memory 150 and, during transfer of PCM data for one area, stores PCM data into the other area and also issues a DMA transfer request.

The DMAC 132 is a general-purpose DMA controller.

The PDMAC 140 is a data transfer unit that, in response to a DMA transfer request, outputs transfer data corresponding to the DMA transfer request from the buffer memory 150 to the PCM controller 160.

The transfer of the transfer data stored in the buffer memory 150 is performed by the DMAC 132 or the PDMAC 140. Which of them is used can be set by a user, for example. The system controller 124 outputs a DMA transfer request that is issued by the audio decoder 122 to either one of the DMAC 132 or the PDMAC 140 which is set in advance.

In this exemplary embodiment, the PDMAC 140 has a transfer reservation function. Specifically, the PDMAC 140 transfers, in response to a received DMA transfer request, transfer data corresponding to the DMA transfer request and, in addition, the PDMAC 140 can accept the next DMA transfer request in the course of executing the transfer. Then, after completion of the transfer in execution, the PDMAC 140 performs transfer corresponding to the DMA transfer request received during the execution of the transfer.

For example, when a DMA transfer request for the area B is received during transfer of transfer data in the area A in response to a DMA transfer request for the area A, the PDMAC 140 accepts the DMA transfer request for the area B and then performs transfer of the area B after completing the transfer of the area A.

The clock oscillator 180 generates a clock for each functional clock to operate. The CPU 110 and the power control unit 170 control on/off of the power of each functional block by controlling the supply of the clock. The details of the power control are described later.

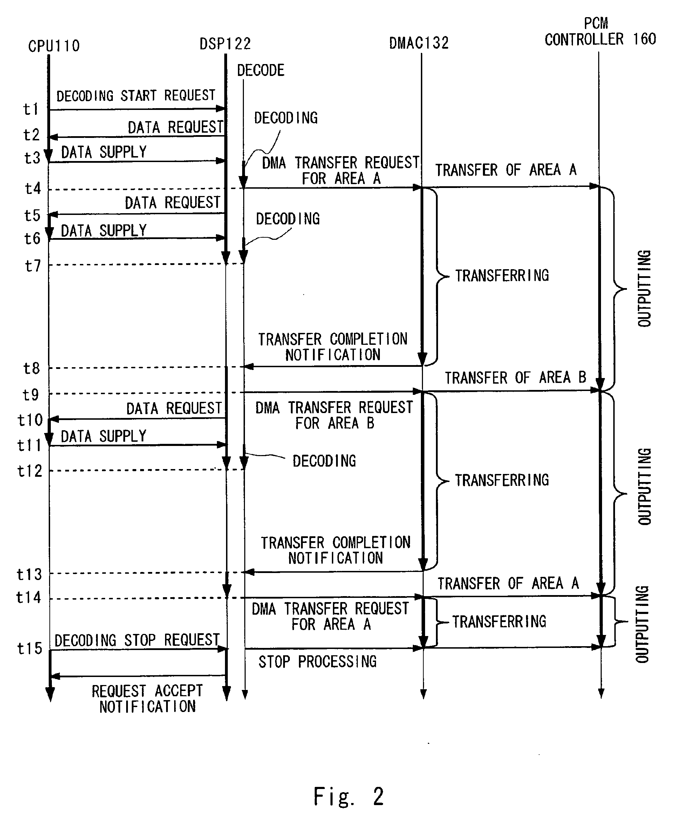

Fig. 2 shows an operation sequence of each functional block in the case of performing DMA transfer by the DMAC 132. First, the CPU 110 acquires compressed audio data from external RAM and issues a decoding start request to the audio decoder (DSP) 122 (time t1). Receiving the decoding start request, the audio decoder 122 makes a request for data for decoding to the CPU 110 (time t2). In response to the data request from the audio decoder 122, the CPU 110 supplies compressed data to the audio decoder 122 (time t3). The audio decoder 122 decodes the received compressed data to obtain PCM data, and stores the obtained PCM data into the area A of the buffer memory 150 (time t3 to t4). Then, the audio decoder 122 issues a DMA transfer request of the PCM data in the area A to the DMAC 132 (time t4). In response to the DMA transfer request, the DMAC 132 transfers the PCM data stored in the area A to the PCM controller 160, and the PCM controller 160 outputs the transferred PCM data (time t4-).

Further, the audio decoder 122 checks the availability of the area A and the area B, and if either one is available, transmits a data request to the CPU 110. Because the PCM data is stored in the area A and the area B is available for now, the audio decoder 122 transmits a data request to the CPU 110 (time t5). In response to the data request from the audio decoder 122, the CPU 110 supplies compressed data to the audio decoder 122 (time t6). The audio decoder 122 decodes the received compressed data to obtain PCM data, and stores the obtained PCM data into the area B of the buffer memory 150 (time t6 to t7).

At time t8, because the transfer of the PCM data in the area A is completed, the DMAC 132 transmits a transfer completion notification to the audio decoder 122.

Receiving the transfer completion notification from the DMAC 132, the audio decoder 122 issues a DMA transfer request of the PCM data in the area B to the DMAC 132 (time t9). In response to the DMA transfer request, the DMAC 132 transfers the PCM data stored in the area B to the PCM controller 160, and the PCM controller 160 outputs the transferred PCM data (time t9-).

Further, because the area A is available now, the audio decoder 122 transmits a data request to the CPU 110 (time t10). In response to the data request from the audio decoder 122, the CPU 110 supplies compressed data to the audio decoder 122 (time t11). The audio decoder 122 decodes the received compressed data to obtain PCM data, and stores the obtained PCM data into the area A of the buffer memory 150 (time t11 to t12).

In this manner, the area A and the area B are alternately used for buffering of PCM data, and DMA transfer is repeated.

When no data supply is made in response to a data request to the CPU 110 or when a stop request is made from the CPU 110, DMA transfer ends (time t15).

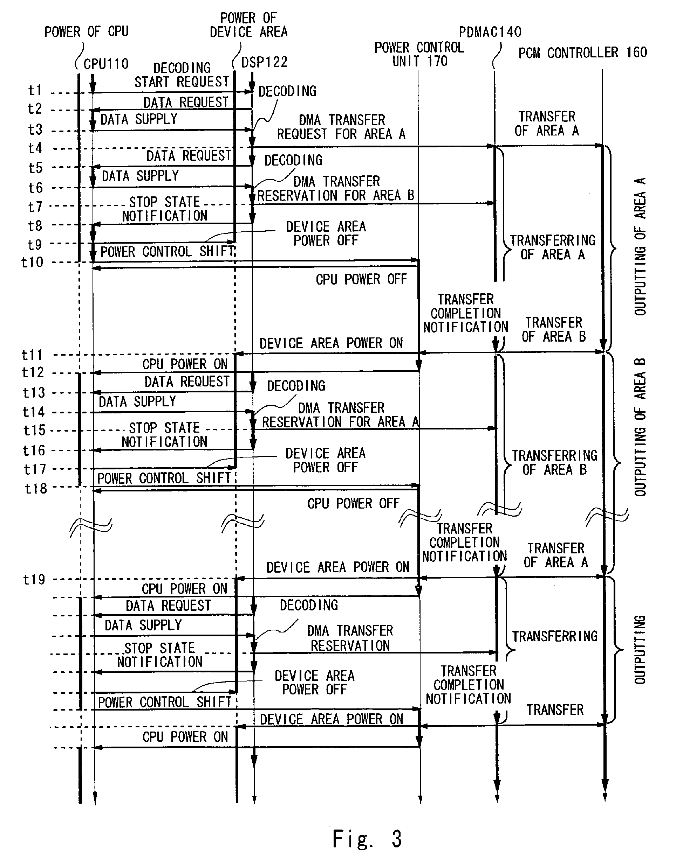

Fig. 3 shows an operation sequence of each functional block in the case of performing DMA transfer by the PDMAC 140. First, the CPU 110 acquires compressed audio data from external RAM and issues a decoding start request to the audio decoder (DSP) 122 (time t1). Receiving the decoding start request, the audio decoder 122 makes a request for data for decoding to the CPU 110 (time t2). In response to the data request from the audio decoder 122, the CPU 110 supplies compressed data to the audio decoder 122 (time t3). The audio decoder 122 decodes the received compressed data to obtain PCM data, and stores the obtained PCM data into the area A of the buffer memory 150 (time t3 to t4). Then, the audio decoder 122 issues a DMA transfer request of the PCM data in the area A to the PDMAC 140 (time t4). In response to the DMA transfer request, the PDMAC 140 transfers the PCM data stored in the area A to the PCM controller 160, and the PCM controller 160 outputs the transferred PCM data (time t4-).

During transfer of the PCM data in the area A, the audio decoder 122 checks the availability of the area B. Because the area B is available, the audio decoder 122 transmits a data request to the CPU 110 (time t5). In response to the data request from the audio decoder 122, the CPU 110 supplies compressed data to the audio decoder 122 (time t6). The audio decoder 122 decodes the received compressed data to obtain PCM data, and stores the obtained PCM data into the area B of the buffer memory 150 (time t6 to t7). Further, after storing the PCM data into the area B, the audio decoder 122 issues a DMA transfer request for the area B to the PDMAC 140 and reserves transfer (time t7). The PDMAC 140 accepts the reservation along with performing the transfer of the area A.

At this time, the PCM data of the area A is being transferred, and the PCM data for which transfer is reserved is stored in the area B. Therefore, the audio decoder 122 enters a state of waiting for completion of DMA transfer, and the CPU 110 enters a state of waiting for a data request from the audio decoder 122. The audio decoder 122 notifies the CPU 110 of that decoding is in a stop state (time t8).

Receiving the notification, the CPU 110 turns off the power of the device power supply area 120 (time t9). Then, the CPU 110 shifts the power control to the power control unit 170. The power control unit 170 then directly turns off the power of the CPU 110 (time t10).

The power of the CPU 110 and the device power supply area 120 is kept off until the DMA transfer in execution is completed (time t10 to t11). Upon completion of the transfer of the area A, the PDMAC 140 transmits a transfer completion notification to the power control unit 170 and further starts the reserved transfer of the area B (time t11). Receiving the transfer completion notification, the power control unit 170 directly turns on the power of the device power supply area 120 and the CPU 110 (time t11 and t12).

After that, in the PDMAC 140, the transfer of the area A is reserved during the transfer of the area B (time t15). Then, the power of the device power supply area 120 and the CPU 110 is turned off until the transfer of the area B is completed (time t17 and t18).

In this manner, the power of the device power supply area 120 is turned off on condition that the PDMAC 140 is executing transfer and the next DMA transfer request has been transmitted to the PDMAC 140, and turned on each time the transfer by the PDMAC 140 is completed. Thus, while executing the DMA transfer, the power of the audio decoder 122 and the system controller 124, in addition to the DMAC unit 130 including the DMAC 132 and the peripheral devices 134, can be turned off. It is thereby possible to significantly reduce power consumption as well as transferring PCM data to the PCM controller 160 without interruption.

Further, with use of the PDMAC 140, the power of the CPU 110 can be also turned on/off, thereby enabling further reduction of power consumption.

In the case of constructing a system in which the size of the area A and the area B is 48 kbytes, if PCM data to be stored into the buffer memory 150 is data of 44.0 KHz, for example, the time taken for one-time transfer by the PDMAC 140 is about 46.4 msec. On the other hand, the time taken from the power on of the CPU 110 and the device power supply are 120 to the data supply from the CPU 110 is about 60 µsec. Thus, the time from the power on to the power off of the CPU 110 and the device power supply area 120 is significantly shorter than the time taken for one-time transfer by the PDMAC 140, so that the advantage of lower power consumption is largely exerted.

As a result of testing with actual use of MP3 data, when the power of the CPU 110 and the device power supply area 120 is turned off by using the PDMAC 140 as in this exemplary embodiment, power consumption is reduced by about 39% compared to a system in which power off is not made.

Further, in this exemplary embodiment, because the DMAC 132, which is a general-purpose DMA controller, and the PDMAC 140 coexist, a normal DMA operation is possible depending on setting.

### [Second exemplary embodiment]

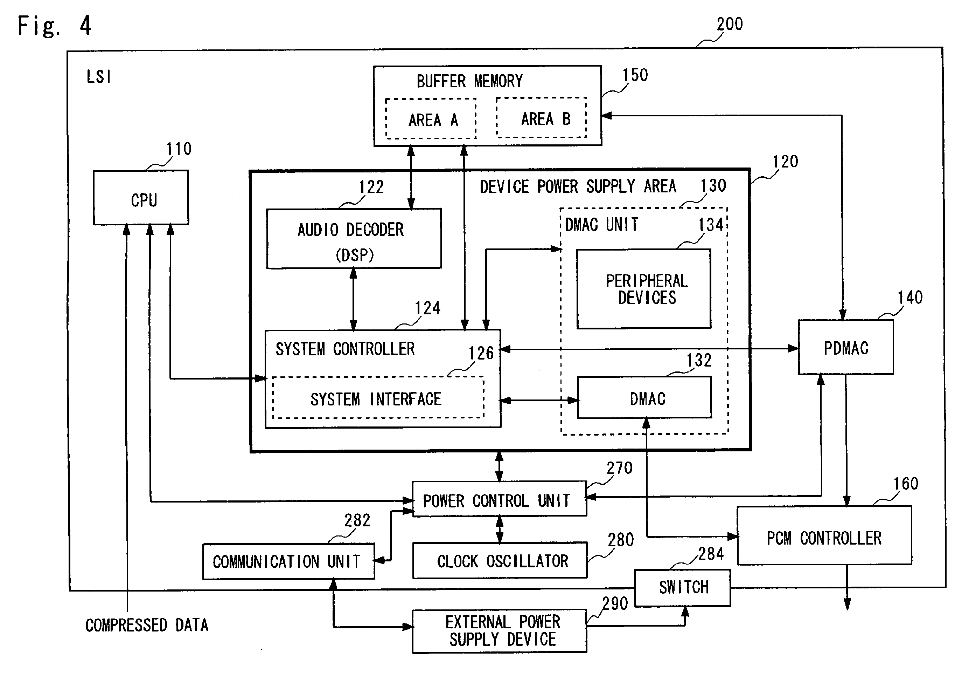

Fig. 4 shows an LSI 200 according to a second exemplary embodiment of the invention. In Fig. 4, the elements having the same functions as those of the LSI 100 are denoted by the same reference numerals, and explanation thereof is omitted. As for a power control unit 270, only the function which is different from the function of the power control unit 170 in the LSI 100 is described.

As shown in Fig. 4, in an area (referred to hereinafter as a power supply area A) which is different from the device power supply area 120, the LSI 200 further includes a switch 284 that controls the power supply state of each function block in the power supply area A or the device power supply area 120, and a communication unit 282 that communicates with an external power supply device 290 placed outside the power supply area A. The supply voltage of the external power supply device 290 is variable. Further, the supply frequency of a clock oscillator 280 in the LSI 200 is variable.

In such a configuration, the power control unit 270 performs control of the clock oscillator 280, control of the switch 284, control of the external power supply device 290 through the communication unit 282 or the like as processing to turn on the power of the CPU 110 and the device power supply area 120 while maintaining the operation of the power supply area A. Further, the power control unit 270 makes detailed control such as reducing a power supply voltage to a function pausing part of the power supply area A or gradually increasing the clock oscillation frequency at the time of startup, thereby improving the stable speed at the time of system restart and achieving further reduction of power consumption.

### [Third exemplary embodiment]

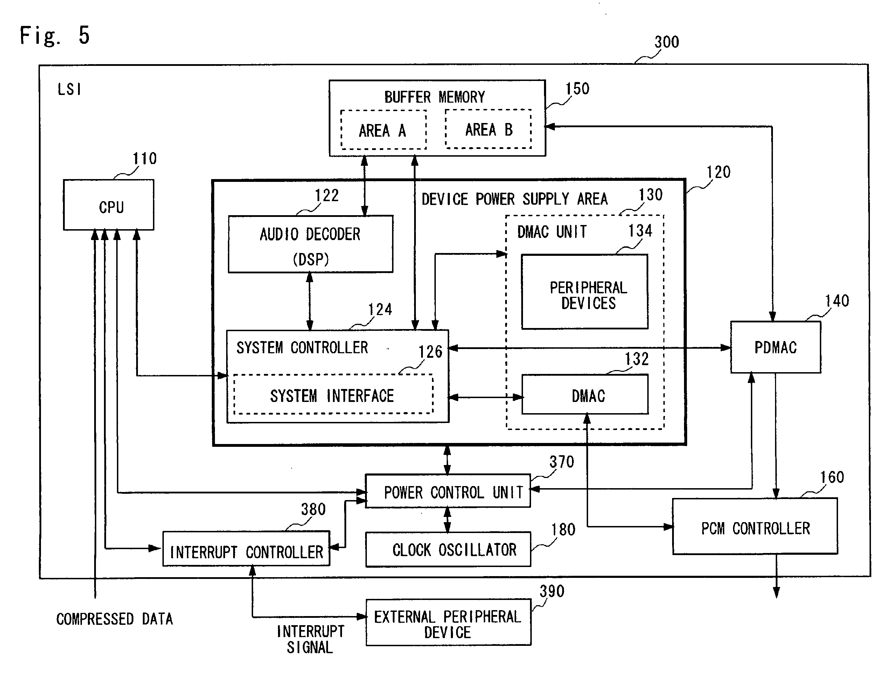

Fig. 5 shows an LSI 300 according to a third exemplary embodiment of the invention. In Fig. 5, the elements having the same functions as those of the LSI 100 are denoted by the same reference numerals, and explanation thereof is omitted. As for a power control unit 370, only the function which is different from the function of the power control unit 170 in the LSI 100 is described.

As shown in Fig. 5, in an area (referred to hereinafter as a power supply area A) which is different from the device power supply area 120, the LSI 300 further includes an interrupt controller 380 that receives an interrupt signal from an external peripheral device 390 placed outside the LSI 300. The interrupt controller 380 is connected to the CPU 110 and the power control unit 370.

The power control unit 370 turns on the power of the CPU 110 when it receives an interrupt signal from the external peripheral device 390 through the interrupt controller 380 during the power off of the CPU 110. It is thereby possible to deal with an interrupt request from the external peripheral device 390 even during the power off of the CPU 110.

For example, in the first exemplary embodiment, the power off of the device power supply area 120 is made by the CPU 110, the power off of the CPU 110 and the power on of the device power supply area 120 and the CPU 110 are made by the power control unit 170. However, the power on/off of the device power supply area 120 and the CPU 110 may be all controlled by the power control unit 170.

Further, although the power on/off is controlled also for the CPU 110 in each of the exemplary embodiments described above, the power on/off may be controlled only for the device power supply area 120. Further, in the case of a system in which the power of the CPU 110 is not turned off, the power control unit 170 may be eliminated and the power on/off of the device power supply area 120 may be controlled by the CPU 110.

Furthermore, although the technique of the present invention is applied to the system in which the audio decoder 122 is placed in the device power supply area 120 in each of the exemplary embodiments described above, the present invention may be applied to a system in which the audio decoder 122 is not placed, and the function of the audio decoder 122 is carried out by the CPU.

While the invention has been described in terms of several exemplary embodiments, those skilled in the art will recognize that the invention can be practiced with various modifications within the scope of the appended claims and the invention is not limited to the examples described above.

Further, the above exemplary embodiments can be combined as desirable by one of ordinary skill in the art.

Further, the scope of the claims is not limited by the exemplary embodiments described above.

Furthermore, it is noted that, Applicant's intent is to encompass equivalents of all claim elements, even if amended later during prosecution.

An exemplary embodiment of the present invention can be summarized as follows. In a device power supply area where centralized power control is made, a general-purpose DMA controller that can transfer PCM data stored in a buffer memory, peripheral devices of the general-purpose DMA controller, and a system controller that transmits a DMA transfer request are placed. A PDMAC has a transfer reservation function. The power of the device power supply area is turned off on condition that the PDMAC is executing transfer and the next DMA transfer request has been transmitted to the PDMAC, and turned on each time transfer by the PDMAC is completed. Power consumption of an apparatus that reproduces compressed data of audio, video or the like is thereby reduced.

## Claims

1. A data processing circuit that decodes compressed data and transfers data by DMA (Direct Memory Access), comprising:
a buffer memory that stores transfer data obtained by decoding the compressed data;
a device power supply area (120) where centralized power control is made, the device power supply area including:
a general-purpose DMA controller (132) that can transfer the transfer data stored in the buffer memory,
peripheral devices of the general-purpose DMA controller (132), and
a system controller (124) that transmits a DMA transfer request; and
a data transfer unit (140) that can transfer the transfer data stored in the buffer memory, wherein
the system controller transmits a DMA transfer request to the general-purpose DMA controller (132) or the data transfer unit (140),
in response to a DMA transfer request received through the system controller (124), the data transfer unit transfers transfer data corresponding to the DMA transfer request and, after completion of transfer in execution, transfers transfer data corresponding to a next DMA transfer request received during execution of the transfer, and
power of the device power supply area (120) is turned off on condition that the data transfer unit is executing transfer and the next DMA transfer request has been transmitted to the data transfer unit (140), and turned on each time transfer by the data transfer unit (140) is completed.

2. The data processing circuit according to Claim 1, wherein the device power supply area (120) further includes a DSP (Digital Signal Processor) (122) that decodes the compressed data and sequentially stores data into the buffer memory, and sequentially issues a DMA transfer request corresponding to the stored transfer data.

3. The data processing circuit according to Claim 2, further comprising:
a CPU that supplies the compressed data to the DSP (122); and
a power control unit (170), wherein
the CPU turns off power of the device power supply area (120) and passes a right to control power to the power control unit on condition that the data transfer unit is executing transfer and the next DMA transfer request has been transmitted to the data transfer unit (140), and
the data control unit turns off power of the CPU after receiving the right, and then turns on power of the CPU and the device power supply area when transfer by the data transfer unit is completed.

4. The data processing circuit according to one of Claims 1 to 3, wherein the compressed data is compressed data of audio data or video data.

## Patentansprüche

1. Datenverarbeitungsschaltung, die komprimierte Daten dekodiert und Daten mittels DMA (Direkter Speicherzugriff, Direct Memory Access) überträgt, umfassend:
einen Pufferspeicher, der Übertragungsdaten speichert, die durch Dekodieren der komprimierten Daten erhalten sind;
einen Geräteenergiezuführungsbereich (120), in dem zentralisierte Energiesteuerung vorgenommen wird, wobei der Geräteenergiezuführungsbereich enthält:
einen Universal-DMA-Controller (132), der die Übertragungsdaten, die in dem Pufferspeicher gespeichert sind, übertragen kann,
Peripheriegeräte des Universal-DMA-Controllers (132), und
einen Systemcontroller (124), der eine DMA-Übertragungsanforderung überträgt; und
eine Datenübertragungseinheit (140), welche die Übertragungsdaten, die in dem Pufferspeicher gespeichert sind, übertragen kann, wobei
der Systemcontroller (124) eine DMA-Übertragungsanforderung an den Universal-DMA-Controller (132) oder die Datenübertragungseinheit (140) überträgt,
die Datenübertragungseinheit als Antwort auf eine DMA-Übertragungsanforderung, die durch den Systemcontroller (124) empfangen wurde, Übertragungsdaten, die der DMA-Übertragungsanforderung entsprechen, überträgt und nach Beendigung der Übertragungsausführung Übertragungsdaten, die einer nächsten DMA-Übertragungsanforderung entsprechen, welche während der Übertragungsausführung empfangen wurde, überträgt, und
Energie des Geräteenergiezuführungsbereiches (120) unter der Bedingung ausgeschalten ist, dass die Datenübertragungseinheit die Übertragung ausführt und die nächste DMA-Übertragungsanforderung an die Datenübertragungseinheit (140) übertragen wurde, und jedes Mal angeschaltet ist, wenn die Übertragung durch die Datenübertragungseinheit (140) beendet ist.

2. Datenverarbeitungsschaltung nach Anspruch 1, wobei der Geräteenergiezuführungsbereich (120) ferner einen DSP (Digitaler Signalprozessor, Digital Signal Processor) (122) enthält, der die komprimierten Daten dekodiert und Daten aufeinanderfolgend in dem Pufferspeicher speichert und der aufeinanderfolgend eine DMA-Übertragungsanforderung ausgibt, die den gespeicherten Übertragungsdaten entspricht.

3. Datenverarbeitungsschaltung nach Anspruch 2, ferner umfassend:
eine CPU, welche die komprimierten Daten an den DSP (122) zuführt; und
eine Energiesteuereinheit (170), wobei
die CPU Energie des Geräteenergiezuführungsbereiches (120) ausschaltet und ein Recht zum Steuern der Energie an die Energiesteuereinheit unter der Bedingung vergibt, dass die Datenübertragungseinheit die Übertragung ausführt und die nächste DMA-Übertragungsanforderung an die Datenübertragungseinheit (140) übertragen wurde, und
die Datensteuereinheit Energie der CPU nachdem Empfangen des Rechts ausschaltet und danach Energie der CPU und des Geräteenergiezuführungsbereiches anschaltet, wenn die Übertragung durch die Datenübertragungseinheit beendet ist.

4. Datenverarbeitungsschaltung nach einem der Ansprüche 1 bis 3, wobei die komprimierten Daten komprimierte Daten von Audiodaten oder Videodaten sind.

## Revendications

1. Circuit de traitement de données qui décode des données compressées et transfère des données par DMA (accès direct à la mémoire), comprenant :
une mémoire tampon qui mémorise des données de transfert obtenues en décodant les données compressées ;
une zone d'alimentation de dispositif (120) où une commande de puissance centralisée est effectuée, la zone d'alimentation de dispositif comprenant :
un contrôleur DMA d'usage général (132) qui peut transférer les données de transfert mémorisées dans la mémoire tampon,
des dispositifs périphériques du contrôleur de DMA d'usage général (132), et
un contrôleur de système (124) qui transmet une demande de transfert DMA ; et
une unité de transfert de données (140) qui peut transférer les données de transfert mémorisées dans la mémoire tampon, dans lequel
le contrôleur de système (124) transmet une demande de transfert DMA au contrôleur DMA d'usage général (132) ou à l'unité de transfert de données (140),
en réponse à une demande de transfert DMA reçue par l'intermédiaire du contrôleur de système (124), l'unité de transfert de données transfère des données de transfert correspondant à la demande de transfert DMA et, à la fin du transfert en cours d'exécution, transfère des données de transfert correspondant à une demande de transfert DMA reçue pendant l'exécution du transfert, et
la puissance de la zone d'alimentation de dispositif (120) est désactivée à la condition que l'unité de transfert de données exécute le transfert et que la demande de transfert DMA suivante ait été transmise à l'unité de transfert de données (140) et est activée à chaque fois qu'un transfert par l'unité de transfert de données (140) est achevé.

2. Circuit de traitement de données selon la revendication 1, dans lequel la zone d'alimentation de dispositif (120) comprend en outre un DSP (processeur de signaux numériques) (122) qui décode les données compressées et mémorise séquentiellement les données dans la mémoire tampon, et émet séquentiellement une demande de transfert DMA correspondant aux données de transfert mémorisées.

3. Circuit de traitement de données selon la revendication 2, comprenant en outre :
une CPU qui fournit les données compressées au DSP (122) ; et
une unité de commande de puissance (170), dans lequel
la CPU désactive la puissance de la zone d'alimentation de dispositif (120) et transfère un droit de commande de la puissance à l'unité de commande de puissance à la condition que l'unité de transfert de données exécute le transfert et que la demande de transfert DMA suivante ait été transmise à l'unité de transfert de données (140), et
l'unité de commande de données désactive la puissance de la CPU après la réception du droit, et active ensuite la puissance de la CPU et la zone d'alimentation de dispositif lorsque le transfert par l'unité de transfert de données est achevé.

4. Circuit de traitement de données selon l'une des revendications 1 à 3, dans lequel les données compressées sont des données compressées de données audio ou de données vidéo.
